# EUROPEAN PATENT SPECIFICATION

(11) **EP 3 989 071 B1**
(45) Date of publication and mention of the grant of the patent: **06.09.2023**
(21) Application number: 21201582.0
(22) Date of filing: 08.10.2021
(51) Int. Cl.: G06F 11/14, G08G 5/00

(54) **FLIGHT PLAN STORAGE AND RECOVERY SYSTEM AND METHOD**
SYSTEM UND VERFAHREN ZUR SPEICHERUNG UND WIEDERHERSTELLUNG EINES FLUGPLANS
SYSTÈME ET PROCÉDÉ DE STOCKAGE ET DE RÉCUPÉRATION DE PLAN DE VOL

(30) Priority: 22.10.2020 IN 202011046051; 08.12.2020 US 202017115130
(43) Date of publication of application: 27.04.2022
(73) Proprietor: Honeywell International Inc., Charlotte, NC 28202 (US)
(72) Inventor: LOOTS, Dennis, Charlotte, 28202 (US); HEGDE, Satish, Charlotte, 28202 (US); SHAMASUNDAR, Raghu, Charlotte, 28202 (US); STEPHENSON, Chad, Charlotte, 28202 (US); LIU, Wen Hua, Charlotte, 28202 (US)
(74) Representative: LKGlobal UK Ltd.

(56) References cited:
- CN-A- 108 255 149
- US-A1- 2007 219 678
- US-A1- 2020 310 907
- GRIGUERE H ED - INSTITUTE OF ELECTRICAL AND ELECTRONICS ENGINEERS: "FLIGHT MANAGEMENT SYSTEM BACK-UP NAVIGATION FOR THE A330/A340 AIRCRAFT", PROCEEDINGS OF THE DIGITAL AVIONICS SYSTEMS CONFERENCE. LOS ANGELES, OCT. 14 - 17, 1991; [PROCEEDINGS OF THE DIGITAL AVIONICS SYSTEMS CONFERENCE], NEW YORK, IEEE, US, vol. CONF. 10, 14 October 1991 (1991-10-14), pages 482-486, XP000309289, ISBN: 978-0-7803-0116-0

## Description

### TECHNICAL FIELD

The present disclosure generally relates to an aircraft flight management system, and more particularly relates to a flight plan storage and recovery system and method.

### BACKGROUND

Many modern aircraft include a flight management system (FMS). As is generally known, the FMS is a specialized processing system that automates a variety of in-flight tasks such as in-flight management of the flight plan. Using various onboard sensors, the FMS determines aircraft position and guides the aircraft along its flight plan.

The flight plan, as is generally known, comprises, but is not limited to, a set of aircraft data that is generally referred to as flight plan data. The flight plan data is typically input by a user (e.g., pilot or other flight crew member) or via datalink from an Airline Operational Center (AOC) and is stored in the FMS working memory, such as processor random-access-memory (RAM). The flight plan data is generally retained over processor restarts, which may occur as a result of minor software or data errors. Thus, it can be readily re-established, and the flight plan continued with minimal pilot interruption.

Though highly unlikely, it is postulated that repetitive occurrences of software or data errors could occur in the FMS. This event could result in the purposeful, complete, and severe loss of all data, including the flight plan data. Such an unlikely, yet postulated event is referred to as "severe reset." If a severe reset were to occur, it is assumed that there is data corruption or inconsistency within the FMS working memory. As a result, the FMS working memory would be forcefully cleared in order to re-establish a working FMS, albeit without the previously entered flight plan data.

As may be appreciated, if the flight plan data is cleared during flight, it would place an increased workload upon the flight crew to re-enter and attempt to reconstruct the original flight plan. The workload increase would be even more pronounced if this were to occur during a critical phase of flight, such as during the descent or approach flight phases.

Hence, there is a need for a system and method that does not rely on flight crew re-entry and/or reconstruction of an aircraft flight plan following an unlikely, yet postulated event that causes a complete loss of flight plan data from the FMS working memory. The present invention addresses at least this need.

US 2007/219678 discloses a method of assisting in the navigation of an aircraft comprising a step for updating a flight plan according to a new clearance received on board by a ground/onboard communication system. The clearance comprises an action conditional on the flight plan linked to a floating point of the path defined by an altitude constraint of the aircraft; on receipt of the new clearance, the update is performed directly by means of the FMS linked to the communication system. This is a predictive method.

The paper "Flight Management System Back-Up Navigation For The A330/A340 Aircraft explores the purpose and capability of an MCDU back-up navigation used on the A330/A340 in providing navigation back-up and equipment redundancy.

US2020/310907 discloses a smart exception handler system for safety-critical real-time systems. The system is configured to: receive a plurality of parameters at a plurality of nodal points in a real-time execution path; analyze the received parameters using a trained exception handling model, wherein the trained exception handling model has been trained using machine learning techniques to learn the critical path of execution and/or critical range of parameters at critical nodes, wherein the critical range of parameters comprises a learned threshold at a node; compute, using the trained exception handling model, a probability of fault at the critical nodes; compare the probability of fault at a critical node against a learned threshold at the node; and take proactive action in real-time to avoid the occurrence of a fault when the probability of fault at the node is higher than the learned threshold at the node.

### BRIEF SUMMARY

This summary is provided to describe select concepts in a simplified form that are further described in the Detailed Description.

In one embodiment, a method of storing and recovering a flight plan includes loading flight plan data into working memory of an aircraft flight management system (FMS). When determination is made, in the FMS, that a storage triggering event has occurred, a copy of at least a portion of the flight plan data is transmitted from the working memory to a non-volatile storage medium. A display command is supplied from the FMS to a display device, at least following recovery of the FMS from a severe reset, that causes the display device to render a retrieval prompt. A retrieval command is received at the FMS, via a user input device, that causes the FMS to retrieve the at least a portion of the flight plan data from the non-volatile memory and store it in the working memory. The severe reset is defined as one or more software errors that causes the FMS to clear its working memory.

In another embodiment, a flight plan storage and recovery system includes a non-volatile storage medium, a display device, a user input, and a flight management system (FMS). The non-volatile storage medium is configured to receive and store flight plan data. The display device is configured to receive display commands. The user input device is configured to receive user input. The FMS includes working memory, is in operable communication with the non-volatile storage medium, the display device, and the user input device, and configured to: receive and load flight plan data into the working memory; determine when a storage triggering event has occurred; transmit a copy of at least a portion of the flight plan data from the working memory to the non-volatile storage medium, in response to determining that the storage triggering event has occurred; supply a display command to the display device, at least following recovery of the FMS from a severe reset, that causes the display device to render a retrieval prompt, wherein the severe reset is defined as one or more software errors that causes the FMS to clear the working memory; and retrieve the at least a portion of the flight plan data from the non-volatile memory and store it in the working memory upon receipt of a retrieval command from the user input device.

Furthermore, other desirable features and characteristics of the flight plan storage and recovery system and method will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a functional block diagram of one embodiment of a flight plan storage and recovery system;
FIGS. 2 and 3 depict functional block diagrams of alternative embodiments of the flight plan storage and recovery system; and

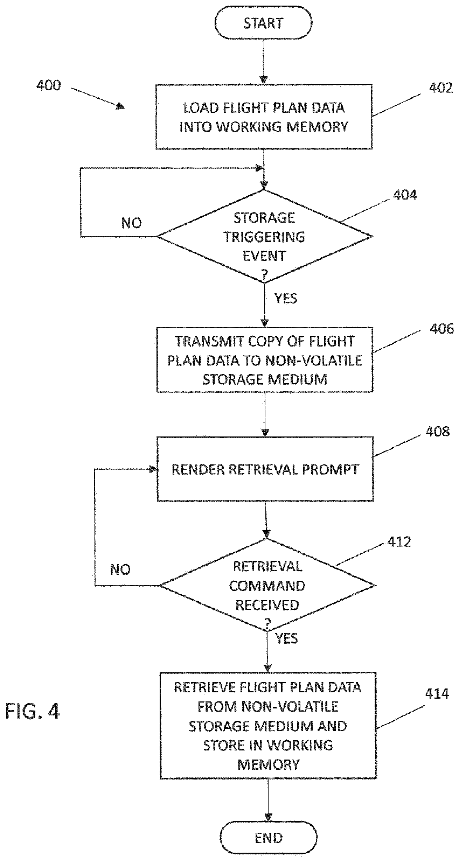

FIG. 4 depicts a process, in flowchart form, that may be implemented by the flight plan storage and recovery system.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims.

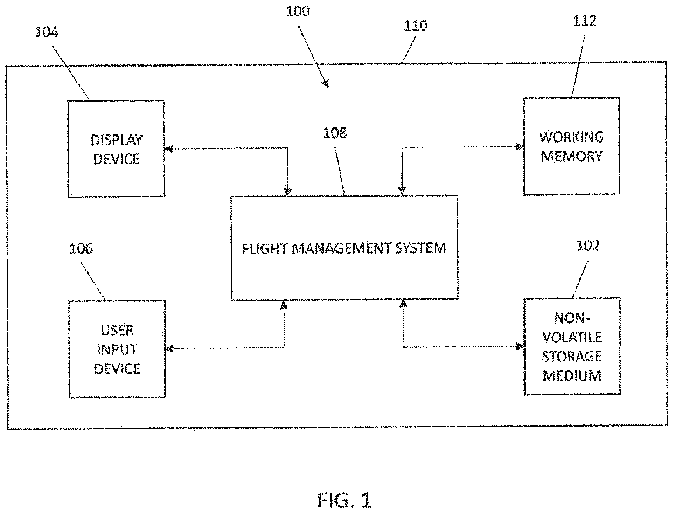

Referring to FIG. 1, one embodiment of a flight plan storage and recovery system 100 is depicted and includes a non-volatile storage medium 102, a display device 104, a user input device 106, and a flight management system (FMS) 108. In the embodiment depicted in FIG. 1, the entire system 100 is installed within an aircraft 110. However, as will be further described, in some embodiments portions of the system 100 may be readily transported into and removed from the aircraft 110. In other embodiments, portions of the system 100 may be disposed separate and remote from aircraft 110.

The non-volatile storage medium 102 is configured to receive and store at least flight plan data. The non-volatile storage medium will retain the stored flight plan data in the unlikely occurrence of a sever reset. The non-volatile storage medium 102 may be an integral part of the FMS 108, as depicted in FIG. 1, or it may be disposed in one or more devices external to the FMS 108. If the non-volatile storage medium 102 is disposed in one or more devices external to the FMS 108, the non-volatile storage medium 102 may be disposed in one or more portable devices that are readily transported into and removed from the aircraft 110 or it may be permanently disposed separate and remote from the aircraft.

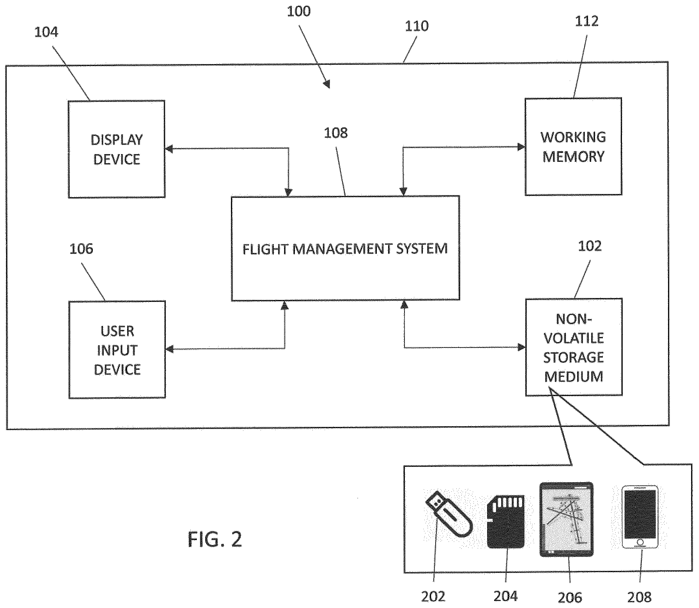

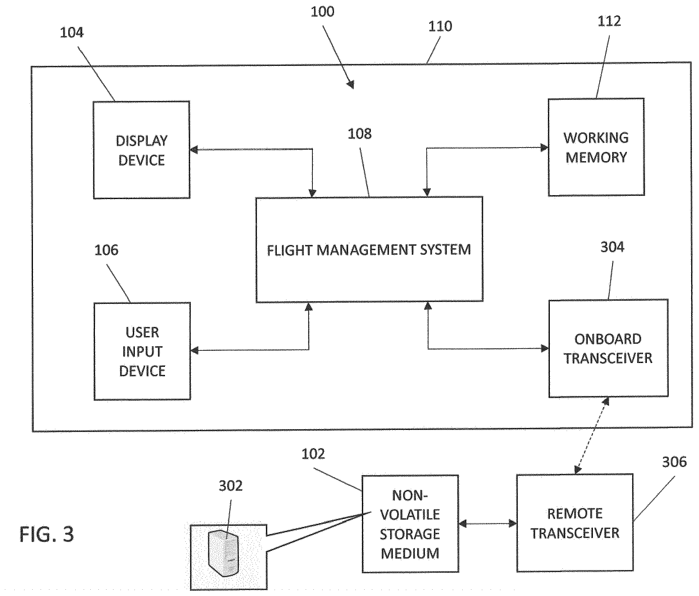

As FIG. 2 depicts, some non-limiting examples of portable devices that form part of the system 100 during system operation include various types of portable storage devices, such as a USB drive 202, an SD card 204, or the like, an electronic flight bag 206, and a smartphone 208. As FIG. 3 depicts, a non-limiting example of a device disposed separate and remote from the aircraft 110 includes a remote server device 302, just to name one example. As FIG. 3 further depicts, when the non-volatile storage device 102 is disposed separate and remote from the aircraft 110, the system 100 additionally includes an onboard transceiver 304 that is configured to wirelessly transmit data to, and receive data from, a remote site. Moreover, the non-volatile storage medium 102 will be in operable communication with a remote transceiver 306, at the remote site, that is configured to wirelessly transmit data to, and receive data from, onboard transceiver 304.

The display device 104 is in operable communication with the FMS 108. The display device 104 is configured to receive display commands from at least the FMS 108 and is operable, upon receipt of the display commands, to render one or more graphical representations or images, as described in greater detail below. The display device 104 may be any one or more of numerous head-up display devices or head down display devices. Some non-limiting examples of suitable display devices include multi-function display (MFD), a primary flight display (PFD), and a multi-function control and display unit (MCDU), just to name a few.

The user input device 106 is coupled to the FMS 108 and is configured to receive user input. The user input device 106 and the FMS 108 are cooperatively configured to allow a user (e.g., a pilot, co-pilot, or other flight crew member) to interact with the display device 104 and/or other elements of the system 100. Depending on the embodiment, the user input device 106 may be realized as a keypad, touchpad, keyboard, mouse, touch panel (or touchscreen), joystick, knob, line select key or another suitable device adapted to receive input from a user. In some embodiments, the user input device 106 and the display device 104 may be formed as part of an integral unit (e.g., MCDU).

The FMS 108 includes at least working memory 112 and is in operable communication with the non-volatile storage medium 102, the display device 104, and the user input device 106. The working memory 112 is preferably integral to the FMS 108 but may, in some embodiments, be disposed separate from the FMS 108. The FMS 108 may be implemented or realized with a general purpose processor, a controller, a microprocessor, a microcontroller, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. In practice, the FMS 108 includes processing logic that is configured to carry out the functions, techniques, and processing tasks that automate the flight plan and that implement the additional functions that are described in greater detail below. Furthermore, the steps of a method or algorithm described in connection with the embodiments disclosed herein may be embodied directly in hardware, in firmware, in a software module executed by the FMS 108, or in any practical combination thereof. The FMS 108 is configured to read and execute computer-executable programming instructions or other data that cause the FMS 108 to execute and perform one or more of the processes, tasks, operations, and/or functions described herein.

The FMS 108, as previously noted, is a specialized processing system that automates, among other things, the flight plan. The flight plan is generally determined on the ground before departure by either the pilot or a dispatcher for the aircraft flight crew. The flight plan, which comprises, but is not limited to, a set of aircraft data that is generally referred to as flight plan data, may be manually entered into the FMS 108 or selected from a library of common routes. In other embodiments the flight plan may be loaded via a communications data link from an airline dispatch center. During preflight planning, additional relevant aircraft performance data may be entered including information such as: gross aircraft weight; fuel weight and the center of gravity of the aircraft. Regardless of how the flight plan data is entered, the FMS 108 is configured to receive and load the flight plan data into the working memory 112. The FMS 108 uses the flight plan data stored in the working memory to automate the flight of the aircraft.

Although highly unlikely, it is postulated that the FMS 108 could experience a "severe reset" event. A severe reset, as defined herein, is one or more software errors that would the cause FMS 108 to clear the working memory 112. This would result in loss of the flight plan data. Thus, the depicted FMS 108 is additionally configured to implement additional functionality to store and recover a flight plan that has been loaded and stored in the working memory 112. This additional functionality will now be described.

The FMS 108 is additionally configured to determine when a storage triggering event has occurred and, in response to determining that the storage triggering event has occurred, to transmit a copy of at least a portion of the flight plan data from the working memory 112 to the non-volatile storage medium 102. The storage triggering event may be a manual event or an automatic event. If it is a manual event, the storage triggering event is a storage command that is transmitted from the user input device 106 to the FMS 108. For example, the FMS 108 may command the display device 104 to render and indicator that prompts the pilot to transmit the storage command, via the user input device 106, to the FMS 108.

If the storage triggering event is an automatic event, it is preferably an aircraft-related event. For example, the FMS 108 may transmit a copy of at least a portion of the flight plan data from the working memory 112 to the non-volatile storage medium 102 when one or more of the aircraft engines are started. Or it could do so when the aircraft commences its take-off roll, or when the aircraft commences its take-off. Any one of numerous other aircraft-related events could also define the storage triggering event. Preferably, however, the aircraft-related event is a relatively early operational event. This is because transmitting a copy of at least a portion of the flight plan data at a relatively early operational event ensures the active flight plan is preserved for potential later use with a low probability for any inherent data inconsistency early in the flight.

The FMS 108 is also configured to supply a display command to the display device 104 that causes the display device to generate a retrieval prompt. The FMS 108 may command the display device 104 to continuously render the retrieval prompt, or it may command the display device 104 to render the retrieval prompt following recovery of the FMS 108 from a severe reset. If the retrieval prompt is continuously rendered, the pilot may, via the user input device 106, supply a retrieval command to the FMS 108 at any time, regardless of whether a severe reset recovery has occurred. Regardless of whether the recovery prompt is continuously rendered or is rendered only following a severe reset recovery, the FMS 108 is configured, upon receipt of a retrieval command from the user input device 106, to retrieve the flight plan from the non-volatile memory 102 and store it in the working memory 112. The flight crew can then perform any other modification, as need or required, to re-establish the remaining flight plan route. It will be appreciated that the retrieval command is preferably generated manually (e.g., via the user input device 106) to provide a level of protection against automatically inserting potentially erroneous flight plan.

It is further noted that the flight plan data that is transmitted and stored to the non-volatile storage medium 102 is retained until the FMS 108, in response to another storage triggering event, transmits new flight plan data to overwrite the previously stored flight plan data. The FMS 108 may also be configured, in response to user input supplied to the user input device 106, to transmit a clear command to the non-volatile storage medium 102 that clears the flight plan data from the non-volatile storage medium 102.

The system 100 described above implements a process for storing and recovering a flight plan. The process 200 is depicted in flowchart form in FIG. 2, and with reference thereto will now be described. In doing so, parenthetical reference numerals refer to like flowchart symbols in FIG. 2.

The depicted process 400 is initiated when flight plan data is loaded into the working memory 112 of the FMS 108 (402). Thereafter, the FMS 108 determines whether or not a storage triggering event has occurred (404). If a storage triggering event has not occurred, then the process loops until a storage triggering event does occur. If the FMS 108 determines that a storage triggering event has occurred, it transmits a copy of at least a portion of the flight plan data from the working memory 112 to the non-volatile storage medium 102 (406).

The FMS 108 then supplies a display command to the display device 104 that causes the display device 104 to render a retrieval prompt (408). As noted above, this display command may be issued so that the display device 104 continuously renders the retrieval prompt, or only after the FMS 108 experiences recovery from a severe reset.

The FMS 108 then determines if it receives a retrieval command from the user input device 106 (412). If it does not, then the process loops until the user input device supplies the retrieval command, at which point the FMS 108 retrieves the flight plan data from the non-volatile memory 102 and stores it in the working memory 112 (414).

The system and method described herein does not rely on flight crew re-entry and/or reconstruction of an aircraft flight plan following an unlikely, yet postulated event that causes a complete loss of flight plan data from the FMS working memory.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, while such implementations may still fall within the scope of the appended claims. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A flight plan storage and recovery system (100), comprising:
a non-volatile storage medium (102) configured to receive and store flight plan data;
a display device (104) configured to receive display commands;
a user input device (106) configured to receive user input; and
a flight management system (FMS) (108) comprising working memory (112), the FMS in operable communication with the non-volatile storage medium, the display device, and the user input device, the FMS configured to:
receive and load flight plan data into the working memory;
determine when a storage triggering event has occurred;
transmit a copy of at least a portion of the flight plan data from the working memory to the non-volatile storage medium, in response to determining that the storage triggering event has occurred;
supply a display command to the display device, at least following recovery of the FMS from a severe reset, that causes the display device to render a retrieval prompt, wherein the severe reset is defined as one or more software errors that causes the FMS to clear the working memory; and
retrieve the at least a portion of the flight plan data from the non-volatile memory and store it in the working memory upon receipt of a retrieval command from the user input device.

2. The system of claim 1, wherein the FMS is further configured to:
transmit a clear command to the non-volatile storage medium that clears the at least a portion of the flight plan data from the non-volatile storage medium.

3. The system of claim 2, wherein the FMS is further configured to transmit the clear command in response to user input supplied to the user input device.

4. The system of claim 1, wherein the non-volatile storage medium is an integral part of the FMS.

5. The system of claim 1, wherein the non-volatile storage medium is a portable memory device.

6. The system of claim 1, wherein the non-volatile storage medium is disposed remote from the FMS.

7. The system of claim 1, wherein the storage triggering event comprises transmitting a storage command from the user input device to the FMS.

8. The system of claim 1, wherein the storage triggering event comprises an aircraft-related event.

9. The system of claim 8, wherein the aircraft-related event includes starting one or more aircraft engines, commencing a take-off roll, or commencing aircraft take-off.

10. The system of claim 1, wherein the display command that causes the display device to render the prompt is supplied from the FMS before the recovery of the FMS from the severe reset.

11. A method of storing and recovering a flight plan, comprising the steps of:
loading flight plan data into working memory (112) of an aircraft flight management system (FMS) (108);
determining, in the FMS, that a storage triggering event has occurred;
transmitting a copy of at least a portion of the flight plan data from the working memory to a non-volatile storage medium (102), in response to the FMS determining that the storage triggering event has occurred;
supplying a display command from the FMS to a display device (104), at least following recovery of the FMS from a severe reset, that causes the display device to render a retrieval prompt; and
receiving a retrieval command at the FMS, via a user input device (106), that causes the FMS to retrieve the at least a portion of the flight plan data from the non-volatile memory and store it in the working memory,
wherein the severe reset is defined as one or more software errors that causes the FMS to clear its working memory.

12. The method of claim 11, further comprising:
transmitting a clear command to the non-volatile storage medium that clears the at least a portion of the flight plan data from the non-volatile storage medium.

13. The method of claim 11, wherein the non-volatile storage medium is an integral part of the FMS.

14. The method of claim 11, wherein the non-volatile storage medium is a portable memory device.

15. The method of claim 1, wherein the non-volatile storage medium is disposed remote from the FMS.

## Patentansprüche

1. System zum Speichern und Wiederherstellen eines Flugplans (100), umfassend:
ein nichtflüchtiges Speichermedium (102), das zum Empfangen und Speichern von Flugplandaten konfiguriert ist;
eine Anzeigevorrichtung (104), die dazu konfiguriert ist, Anzeigebefehle zu empfangen;
eine Benutzereingabevorrichtung (106), die zum Empfangen von Benutzereingaben konfiguriert ist; und
ein Flugmanagementsystem (FMS) (108), das einen Arbeitsspeicher (112) umfasst, wobei das FMS in betriebsfähiger Kommunikation mit dem nichtflüchtigen Speichermedium, der Anzeigevorrichtung und der Benutzereingabevorrichtung steht, wobei das FMS konfiguriert ist zum:
Empfangen und Laden von Flugplandaten in den Arbeitsspeicher;
Bestimmen, wann ein speicherauslösendes Ereignis aufgetreten ist;
Übertragen einer Kopie mindestens eines Abschnitts der Flugplandaten aus dem Arbeitsspeicher an das nichtflüchtige Speichermedium, als Reaktion auf das Bestimmen, dass das speicherauslösende Ereignis aufgetreten ist;
Liefern eines Anzeigebefehls an die Anzeigevorrichtung, mindestens nach dem Wiederherstellen des FMS von einem schweren Reset, der die Anzeigevorrichtung veranlasst, eine Abrufaufforderung wiederzugeben, wobei der schwere Reset als ein oder mehrere Softwarefehler definiert ist, die den FMS veranlassen, den Arbeitsspeicher zu löschen; und
Abrufen des mindestens einen Abschnitts der Flugplandaten aus dem nichtflüchtigen Speicher und Speichern in dem Arbeitsspeicher bei Empfang eines Abrufbefehls von der Benutzereingabevorrichtung.

2. System nach Anspruch 1, wobei das FMS konfiguriert ist zum:
Übertragen eines Löschbefehls an das nichtflüchtige Speichermedium, der mindestens einen Abschnitt der Flugplandaten aus dem nichtflüchtigen Speichermedium löscht.

3. System nach Anspruch 2, wobei das FMS ferner zum Übertragen des Löschbefehls als Reaktion auf eine Benutzereingabe an die Benutzereingabevorrichtung konfiguriert ist.

4. System nach Anspruch 1, wobei das nichtflüchtige Speichermedium ein integraler Bestandteil des FMS ist.

5. System nach Anspruch 1, wobei das nichtflüchtige Speichermedium eine tragbare Speichereinrichtung ist.

6. System nach Anspruch 1, wobei das nichtflüchtige Speichermedium entfernt von dem FMS angeordnet ist.

7. System nach Anspruch 1, wobei das speicherauslösende Ereignis das Übertragen eines Speicherbefehls von der Benutzereingabevorrichtung an das FMS umfasst.

8. System nach Anspruch 1, wobei das speicherauslösende Ereignis ein luftfahrzeugbezogenes Ereignis umfasst.

9. System nach Anspruch 8, wobei das luftfahrzeugbezogene Ereignis Starten eines oder mehrerer Luftfahrzeugtriebwerke, Beginnen eines Startrollens oder Beginnen des Abhebens des Luftfahrzeugs beinhaltet.

10. System nach Anspruch 1, wobei der Anzeigebefehl, der die Anzeigevorrichtung veranlasst, die Eingabeaufforderung wiederzugeben, von dem FMS vor der Wiederherstellung des FMS aus dem schweren Reset geliefert wird.

11. Verfahren zum Speichern und Wiederherstellen eines Flugplans, umfassend die folgenden Schritte:
Laden von Flugplandaten in den Arbeitsspeicher (112) eines Luftfahrzeug-Flugmanagementsystems (FMS) (108);
Bestimmen, in dem FMS, dass ein speicherauslösendes Ereignis aufgetreten ist;
Übertragen einer Kopie mindestens eines Abschnitts der Flugplandaten aus dem Arbeitsspeicher an ein nichtflüchtiges Speichermedium (102) als Reaktion darauf, dass das FMS bestimmt, dass das speicherauslösende Ereignis aufgetreten ist;
Liefern eines Anzeigebefehls von dem FMS an eine Anzeigevorrichtung (104), mindestens nach dem Wiederherstellen des FMS von einem schweren Reset, der bewirkt, dass die Anzeigevorrichtung eine Abrufaufforderung wiedergibt; und
Empfangen eines Abrufbefehls an dem FMS über eine Benutzereingabevorrichtung (106), der das FMS veranlasst, den mindestens einen Abschnitt der Flugplandaten aus dem nichtflüchtigen Speicher abzurufen und in dem Arbeitsspeicher zu speichern,
wobei der schwere Reset als ein oder mehrere Softwarefehler definiert ist, die das FMS veranlassen, seinen Arbeitsspeicher zu löschen

12. Verfahren nach Anspruch 11, ferner umfassend:
Übertragen eines Löschbefehls an das nichtflüchtige Speichermedium, der mindestens einen Abschnitt der Flugplandaten aus dem nichtflüchtigen Speichermedium löscht.

13. Verfahren nach Anspruch 11, wobei das nichtflüchtige Speichermedium ein integraler Bestandteil des FMS ist.

14. Verfahren nach Anspruch 11, wobei das nichtflüchtige Speichermedium eine tragbare Speichereinrichtung ist.

15. Verfahren nach Anspruch 1, wobei das nichtflüchtige Speichermedium entfernt von dem FMS angeordnet ist.

## Revendications

1. Système de stockage et de récupération de plans de vol (100), comprenant :
un support de stockage non volatil (102), conçu pour recevoir et pour stocker des données de plans de vol ;
un dispositif d'affichage (104), conçu pour recevoir des instructions d'affichage ;
un dispositif d'entrée d'utilisateur (106), conçu pour recevoir une entrée d'utilisateur ; et
un système de gestion de vol (FMS) (108), comprenant une mémoire de travail (112), le FMS étant en communication fonctionnelle avec le support de stockage non volatil, avec le dispositif d'affichage et avec le dispositif d'entrée utilisateur et le FMS étant conçu :
pour recevoir et pour charger les données de plans de vol dans la mémoire de travail ;
pour déterminer quand un événement déclencheur de stockage s'est produit ;
pour transmettre une copie d'au moins une partie des données de plans de vol de la mémoire de travail au support de stockage non volatil, en réponse à une détermination de l'occurrence de l'événement déclencheur de stockage ;
pour fournir une instruction d'affichage au dispositif d'affichage, au moins après la récupération du FMS après une réinitialisation importante, qui amène le dispositif d'affichage à présenter une invite de récupération, la réinitialisation importante étant définie comme une ou plusieurs erreurs logicielles qui amènent le FMS à effacer la mémoire de travail ; et
pour récupérer l'au moins une partie des données de plans de vol à partir de la mémoire non volatile et pour la stocker dans la mémoire de travail lors d'une réception d'une instruction de récupération provenant du dispositif d'entrée d'utilisateur.

2. Système selon la revendication 1, dans lequel le FMS est en outre conçu :
pour transmettre une instruction d'effacement au support de stockage non volatil qui efface au moins une partie des données de plans de vol du support de stockage non volatil.

3. Système selon la revendication 2, dans lequel le FMS est en outre conçu pour transmettre l'instruction d'effacement en réponse à une entrée utilisateur fournie au dispositif d'entrée d'utilisateur.

4. Système selon la revendication 1, dans lequel le support de stockage non volatil fait partie intégrante du FMS.

5. Système selon la revendication 1, dans lequel le support de stockage non volatil est un dispositif de mémoire portatif.

6. Système selon la revendication 1, dans lequel le support de stockage non volatil est disposé à distance du FMS.

7. Système selon la revendication 1, dans lequel l'événement déclencheur de stockage comprend la transmission d'une instruction de stockage du dispositif d'entrée d'utilisateur au FMS.

8. Système selon la revendication 1, dans lequel l'événement déclencheur de stockage comprend un événement lié à l'aéronef.

9. Système selon la revendication 8, dans lequel l'événement lié à l'aéronef comprend le démarrage d'un ou de plusieurs moteurs d'aéronef, l'amorce d'une course de décollage ou l'amorce du décollage d'aéronef.

10. Système selon la revendication 1, dans lequel l'instruction d'affichage qui amène le dispositif d'affichage à présenter l'invite est fournie par le FMS avant la récupération du FMS après la réinitialisation importante.

11. Procédé de stockage et de récupération d'un plan de vol, comprenant les étapes suivantes :
le chargement de données de plan de vol dans une mémoire de travail (112) d'un système de gestion de vol (FMS) (108) d'aéronef ;
la détermination, dans le FMS, de l'occurrence d'un événement déclencheur de stockage ;
la transmission d'une copie d'au moins une partie des données de plan de vol de la mémoire de travail à un support de stockage non volatil (102), en réponse à la détermination par le FMS de l'occurrence de l'événement déclencheur de stockage ;
la fourniture d'une instruction d'affichage du FMS à un dispositif d'affichage (104), au moins suite à la récupération du FMS après une réinitialisation importante, qui amène le dispositif d'affichage à présenter une invite de récupération ; et
la réception d'une instruction de récupération au niveau du FMS, par l'intermédiaire d'un dispositif d'entrée utilisateur (106), qui amène le FMS à récupérer au moins une partie des données de plan de vol de la mémoire non volatile et à les stocker dans la mémoire de travail,
la réinitialisation importante étant définie comme une ou plusieurs erreurs logicielles qui amènent le FMS à effacer sa mémoire de travail.

12. Procédé selon la revendication 11, comprenant en outre :
la transmission d'une instruction d'effacement au support de stockage non volatil, qui efface au moins une partie des données de plans de vol du support de stockage non volatil.

13. Procédé selon la revendication 11, dans lequel le support de stockage non volatil fait partie intégrante du FMS.

14. Procédé selon la revendication 11, dans lequel le support de stockage non volatil est un dispositif de mémoire portatif.

15. Procédé selon la revendication 1, dans lequel le support de stockage non volatil est disposé à distance du FMS.
